# EUROPEAN PATENT APPLICATION

(11) **EP 1 880 922 A2**
(43) Date of publication of application: **23.01.2008**
(21) Application number: 07112646.0
(22) Date of filing: 17.07.2007
(51) Int. Cl.: B62D 5/04, H02K 3/50, H02K 11/00

(54) **Electric power steering apparatus**

(30) Priority: 21.07.2006 JP 2006199537
(71) Applicant: JTEKT CORPORATION, Chuo-ku Osaka-shi Osaka 542-8502 (JP)
(72) Inventor: Kanda, Naotake, OSAKA-SHI Osaka 542-8502 (JP); Matsubara, Ken, OSAKA-SHI Osaka 542-8502 (JP); Niguchi, Noboru, OSAKA-SHI Osaka 542-8502 (JP); Otsuki, Hidetaka, OSAKA-SHI Osaka 542-8502 (JP)
(74) Representative: de Beaumont, Michel

(57) **Abstract**

In an electric power steering apparatus which includes a brushless motor (52) composed of a cylindrical motor case (1) with a bottom; a bracket (2) for covering an opening of the motor case (1); an end housing (20) for supporting a non-output-shaft side bearing (18) located on one side; a bus bar housing (14) in a ring shape for storing a plurality of bus bars (15); and a rotational angle sensor (12), and drives the brushless motor (52) with a flow of current according to the detected steering torque, the end housing (20) has a cylindrical section (20a) with a flange (20b) surrounding the end on one side and is inserted into the motor case (1) from the opening until the flange (20b) comes into contact with the bottom (1d) of the motor case (1), the bus bar housing (14) is placed to surround the outer circumferential surface of the cylindrical section (20a) of the end housing (20), and the rotational angle sensor (12) is placed in the cylindrical section (20a).

## Description

### BACKGROUND

### 1. Technical Field

The present invention relates to an electric power steering apparatus which comprises a torque sensor for detecting steering torque and a steering-assist brushless motor, and drives the brushless motor with a flow of current according to the steering torque detected by the torque sensor.

### 2. Description of Related Art

An electric power steering apparatus for reducing the driver's burden comprises an input shaft connected to a steering member (steering wheel, handle); and an output shaft connected to wheels through a pinion, a rack, etc.; a connection shaft for connecting the input shaft and the output shaft together; and a torque sensor for detecting steering torque applied to the input shaft based on the angle of torsion caused on the connection shaft, and controls the driving of a steering-assist motor, which is associated with the output shaft, based on the detected value of steering torque.

In such an electric power steering apparatus, a brushless motor has been adopted as a steering-assist motor in recent years to meet a higher output. The brushless motor is a motor which includes a permanent magnet in a rotor, and rotates the rotor by controlling a waveform forming circuit for generating a rotational magnetic field in a stator, based on the (rotating) position of the rotor. Since the brushless motor does not have a brush, there will be no loss due to the brush, mechanical noise, or electric noise due to the brush.

Japanese Patent No. 3593102 discloses an electric power steering apparatus in which a housing and a case have a housing opening and a case opening, respectively, through which a bus bar (lead wire) passes, the bus bar which is exposed from the case opening and electrically connected to a power element is connected through a connection line to a motor coil disposed in the housing, a hole is formed in the housing at a position facing a screw for connecting an end of the bus bar and an end of the connection line, and the end of the bus bar and the end of the connection line are fastened together with a screw through this hole.

### SUMMARY

Since the electric power steering apparatus is installed in a limited space in a vehicle, there is a demand for decreasing the size of the above-mentioned steering-assist brushless motor.

Moreover, when a resolver is used as a rotational angle sensor of the steering-assist brushless motor, it is necessary to precisely adjust the position of the resolver because evenness between the left and right sides of the motor torque is strictly required, and there is a problem that easiness of making the adjustment is required. There is also a problem that the connection structure on the motor side is complicated. Further, since the number of components of the motor is large, the components may be easily dropped and broken in the motor, and the motor may be locked if the components are dropped and broken.

In order to solve the above problems, it is an object to provide an electric power steering apparatus capable of decreasing the size of a steering-assist brushless motor and capable of easily mounting the brushless motor.

It is another object to provide an electric power steering apparatus capable of easily adjusting the position of the resolver in the steering-assist brushless motor and having a small possibility of locking even when the components are dropped and broken in the motor.

An electric power steering apparatus according to a first aspect is characterized by an electric power steering apparatus comprising: a torque sensor for detecting steering torque applied to a steering member; and a brushless motor for assisting steering, wherein said brushless motor includes: a rotary shaft; two bearings supporting said rotary shaft at two positions; a rotor which rotates coaxially with said rotary shaft; a stator having a stator core and stator coils wound on the stator core; a plurality of bus bars for connecting respectively to said stator coils; a cylindrical motor case supporting an outer circumferential surface of the stator core with its inner circumferential surface and having a through-hole in a middle of a bottom provided at an end on one side; an end housing for supporting the bearing on one side; a bracket for supporting the bearing on the other side and covering an opening on the other side of said motor case; a bus bar housing in a ring shape for storing said plurality of bus bars; and a rotational angle sensor for detecting a rotating position of said rotor, and said end housing includes a cylindrical section with a flange surrounding an end on one side, and is inserted into said motor case from the opening until the flange comes into contact with the bottom, said bus bar housing is placed to surround an outer circumferential surface of the cylindrical section of said end housing, and said rotational angle sensor is placed in said cylindrical section, and said brushless motor is driven with a flow of a current according to the steering torque detected by said torque sensor.

An electric power steering apparatus according to a second aspect is characterized in that the motor case is produced by press forming, and the bracket and the end housing are produced by casting.

An electric power steering apparatus according to a third aspect is characterized in that the end housing is screwed to the motor case.

An electric power steering apparatus according to a fourth aspect is characterized by further comprising an end cover for covering the bottom and through-hole of the motor case, wherein the end cover and the end housing are screwed to the motor case by a common screw.

An electric power steering apparatus according to a fifth aspect is characterized in that the brushless motor is a three-phase brushless motor, the bus bars are arranged to connect the stator coils in star, a connector or lead wires for supplying power is attached in a protruding manner to one side of the outer circumference of the motor case, and terminals of the connector or lead wires are inserted through a hole formed in the outer circumferential surface into the motor case and are fastened to the terminals of the bus bars by screws.

According to the electric power steering apparatus of the first aspect, the end housing of the brushless motor includes a cylindrical section with a flange surrounding an end on one side and is inserted into the motor case from the opening until the flange comes into contact with the bottom, the bus bar housing is placed to surround the outer circumferential surface of the cylindrical section of the end housing, and the rotational angle sensor is placed in the cylindrical section. Thus, it is possible to decrease the size of the steering-assist brushless motor, and it is possible to realize an electric power steering apparatus which allows the motor to be easily incorporated. Moreover, it is possible to easily adjust the position of the rotational angle sensor at the final step of assembling the motor.

According to the electric power steering apparatus of the second aspect, the motor case of the brushless motor is produced by press forming, and the bracket and end housing are produced by casting. Therefore, the bracket and end housing of the steering-assist brushless motor can be formed in a manner suitable for each of the shapes (press forming for simple shape, and casting for complicated shape), and it is possible to decrease the steps of manufacturing a motor, it is possible to further decrease the size of the motor, and it is possible to realize an electric power steering apparatus which allows the motor to be easily incorporated.

According to the electric power steering apparatus of the third aspect, since the end housing of the brushless motor is screwed to the motor case, it is possible to fix the end housing of the steering-assist brushless motor to the motor case, and it is possible to install the rotational angle sensor in the end housing. Therefore, it is possible to further decrease the size of the motor, and it is possible to realize an electric power steering apparatus which allows the motor to be easily incorporated.

According to the electric power steering apparatus of the fourth aspect, the bottom and through-hole of the motor case are covered with the end cover of the brushless motor, and the end cover and the end housing are screwed to the motor case by a common screw. Thus, it is possible to prevent entry of foreign matter into the motor from the through-hole of the steering-assist brushless motor, it is possible to reduce the number of screws of the motor, it is possible to further decrease the size of the motor, and it is possible to realize an electric power steering apparatus which allows the motor to be easily incorporated.

According to the electric power steering apparatus of the fifth aspect, the brushless motor is a three-phase brushless motor, the bus bars are arranged to connect the stator coils in star, and a connector or lead wires for supplying power is attached in a protruding manner to one side of the outer circumference of the motor case. The terminals of the connector or lead wires are inserted through a hole formed in the outer circumferential surface of the motor case into the motor case and are fastened to the terminals of the bus bars by screws. Thus, it is possible to further decrease the size of the steering-assist brushless motor, and it is possible to realize an electric power steering apparatus which allows the motor to be easily incorporated. Moreover, it is easy to connect the terminals of the connector or lead wires to the terminals of the bus bars. Even when a motor part such as a screw is loosen and detached, the end housing acts as a stopper and prevents it from entering into the rotating section of the motor, and hence it is possible to prevent the rotation of the motor from being locked by the motor part.

The above and further objects and features will more fully be apparent from the following detailed description with accompanying drawings.

### BRIEF DESCRIPTION OF THE SEVERAL VIEWS OF THE DRAWINGS

FIG. 1 is a schematic view showing the structure of an embodiment of an electric power steering apparatus;
FIG. 2A is a back view showing the outline of a motor of the electric power steering apparatus shown in FIG. 1;
FIG. 2B is a side view showing the outline of the motor of the electric power steering apparatus shown in FIG. 1;
FIG. 3 is a vertical sectional view in a plane passing through a rotary shaft of the motor of the electric power steering apparatus shown in FIG. 1;
FIG. 4 is a vertical sectional view cut near a connecter terminal of the motor of the electric power steering apparatus shown in FIG. 1;
FIG. 5 is a perspective view showing the external appearance of bus bars and a bus bar housing of the motor of the electric power steering apparatus shown in FIG. 1;
FIG. 6 is a circuit diagram showing a star connection of a stator coil;
FIG. 7A is a side view showing the outline of the bus bar housing;
FIG. 7B is a bottom view showing the outline of the bus bar housing;
FIG. 8 is a perspective view showing the outline of a motor-side terminal of the connector;
FIG. 9 is an explanatory view showing a method of attaching the motor-side terminal of the connector to the motor;
FIG. 10 is an explanatory view showing one oval hole substituting three holes formed in the bottom of the motor case and end housing respectively; and
FIG. 11 is a perspective view showing the outline of motor-side terminals of lead wires.

### DETAILED DESCRIPTION

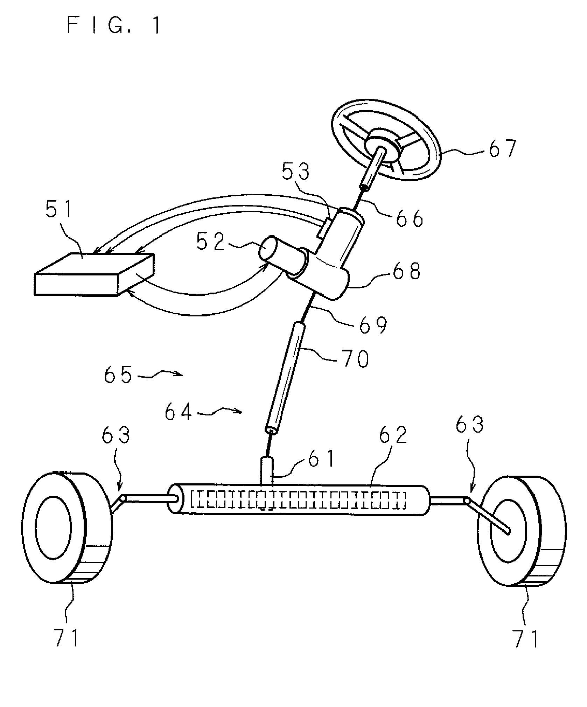

With reference to the drawings, the following description will explain an embodiment. FIG. 1 is a schematic view showing the structure of an embodiment of an electric power steering apparatus. This electric power steering apparatus comprises, for example, a steering member (steering wheel, handle) 67 for steering; a motor 52 as a steering-assist brushless motor which is driven according to the steering of the steering member 67; transmission means 64 for transmitting the rotation of the motor 52 to steering mechanisms 63, 63 through a reduction gear mechanism 68; and a drive controller 51 for controlling the driving of the motor 52. The steering member 67 is connected to an input shaft 66.

The transmission means 64 includes an output shaft 69 connected to the input shaft 66 through a torsion bar (not shown); a connection shaft 70 connected to the output shaft 69 through a universal joint; a pinion shaft 61 connected to the connection shaft 70 through a universal joint; and a rack shaft 62 having rack teeth that mesh with the pinion of the pinion shaft 61 and connected to left and right wheels 71, 71 through the steering mechanisms 63, 63. The input shaft 66 and the transmission means 64 constitute a steering shaft 65.

Disposed around the input shaft 66 is a torque sensor 53 for detecting the value of steering torque applied to the input shaft 66 when the steering member 67 is steered, based on torsion caused on the torsion bar. The drive controller 51 controls the driving of the steering-assist motor 52, based on the value of steering torque detected by the torque sensor 53.

The reduction gear mechanism 68 comprises a worm connected to the output shaft of the motor 52, and a worm wheel fitted to the middle of the output shaft 69, and transmits the rotation of the motor 52 to the output shaft 69 from the worm and worm wheel.

In an electric power steering apparatus having such a structure, a steering force caused by operating the steering member 67 is transmitted to the rack shaft 62 through the input shaft 66, torsion bar (not shown), output shaft 69, connection shaft 70 and pinion shaft 61 to move the rack shaft 62 in an axial direction and activate the steering mechanisms 63, 63. Moreover, based on the value of steering torque detected by the torque sensor 53, the drive controller 51 controls the driving of the motor 52, and transmits the driving force of the motor 52 to the output shaft 69, thereby assisting the steering force and reducing the burden of labor of a driver.

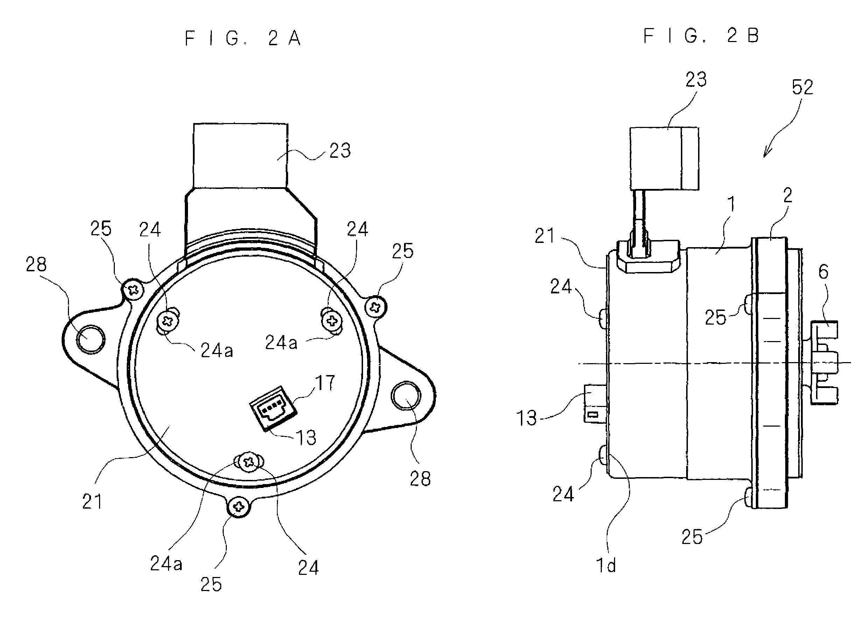

FIG. 2A is a back view and FIG. 2B is a side view respectively showing the outline of the motor 52.

The motor 52 comprises a motor case 1 in the shape of a cylinder with the bottom, an end cover 21 for covering a through-hole If formed in the bottom 1d of the motor case 1, and a bracket 2 for supporting an output-shaft-side bearing and covering the opening of the motor case 1. A flange boss 6 is connected to the output shaft.

The end cover 21 has a shape that substantially covers the bottom 1d of the motor case 1, and is fastened to three screw holes formed in a later-described end housing 20 by screws 24 passing through three holes 24a formed in the circumference thereof and three holes formed in the bottom 1d of the motor case 1 corresponding to the three holes 24a, respectively.

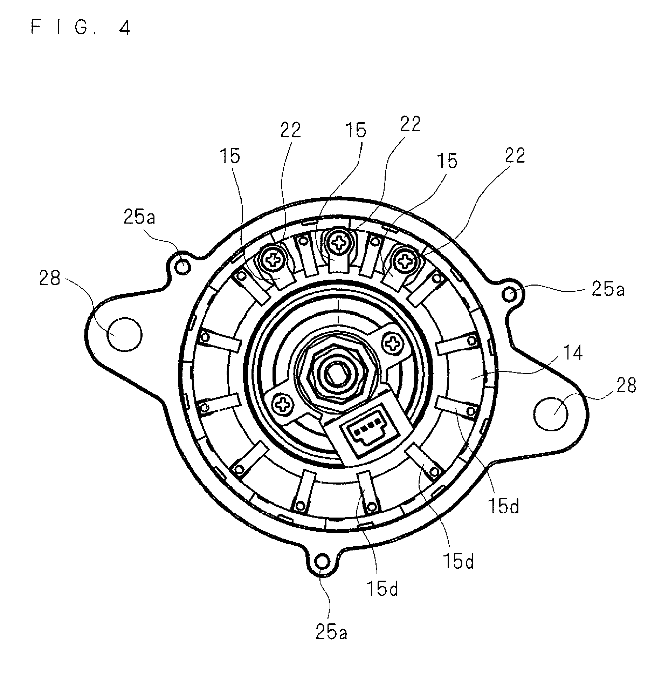

The motor case 1 and bracket 2 are fastened together with three screws 25 passing through three holes 25a (FIG. 4) formed in the circumference of the motor case 1. Screw holes 28 for fixing the motor 52 entirely to a column are formed in two flanges provided at opposite positions on the circumference of the bracket 2. A connector 23 for connecting to the drive controller 51 is attached in a protruding manner to the circumferential surface on a side (one side) adjacent to the bottom 1d of the motor case 1.

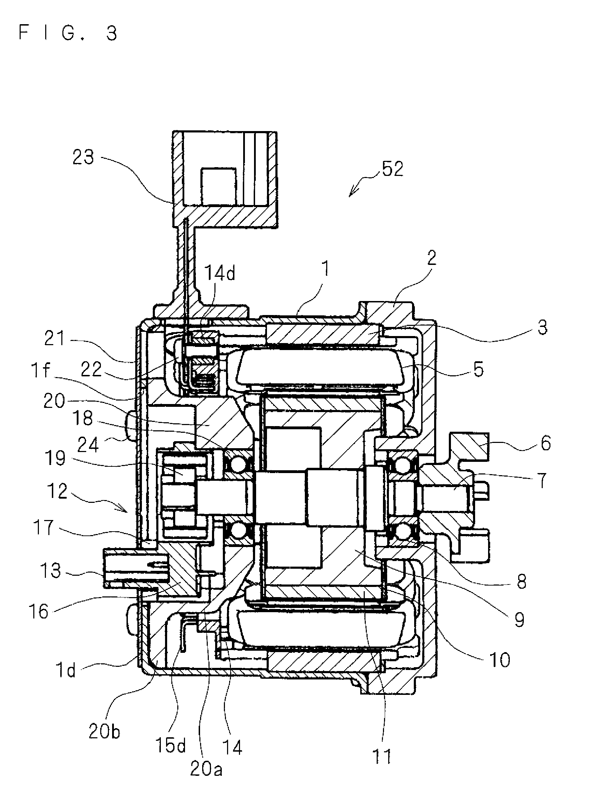

FIG. 3 is a vertical sectional view in a plane passing through the rotary shaft 7 of the motor 52, and FIG. 4 is a vertical sectional view cut near the terminal of the connecter 23.

In the motor 52, the motor case 1 supports the outer circumferential surface of the stator core 3 by its inner circumferential surface, and a through-hole If is formed in the middle of the bottom 1d provided on one side. A stator is constructed by winding stator coils 5 on the stator core 3.

The opening on the other side of the motor case 1 is covered by the bracket 2, and an output-shaft-side bearing 8 supporting the other side of the rotary shaft 7 is supported by the inner circumferential surface of a through-hole formed in the middle of the bracket 2.

A non-output-shaft-side bearing 18 supporting one side of the rotary shaft 7 is supported by the inner circumferential surface of a through-hole formed in the middle of the bottom of the end housing 20 in the shape of a cylinder with the bottom. The end housing 20 comprises a cylindrical section 20a having a flange 20b surrounding an end on one side, and is inserted from the opening of the motor case 1 until the flange 20b comes into contact with the bottom 1d of the motor case 1. Note that the end housing 20 may be inserted into the motor case 1 while applying pressure.

A bus bar housing 14 is placed to surround the outer circumferential surface of the cylindrical section 20a of the end housing 20, and the cylindrical section 20a of the end housing 20 stores therein a resolver rotor 19 and a resolver stator 16 disposed on the outer circumference of the resolver rotor 19, which constitute a resolver (rotational angle sensor) 12 for detecting the rotating position of a later described rotor. Thus, the resolver 12 is positioned on the side opposite to the output-shaft-side bearing 8, and disposed using the space within the internal diameter of the bus bar housing 14.

The power supply line and signal line of the resolver 12 are connected to the drive controller 51 (FIG. 1) with a connector 13, and the connector 13 is inserted into a grommet 17 attached to a hole formed in the end cover 21. The grommet 17 is made from a soft material with excellent contractility, such as sponge or urethane, and can prevent entry of foreign matter from the end cover 21. A soft material with excellent contractility (such as urethane and sponge) is also used for a component that seals the space between the resolver stator 16 and the rotor, and therefore, even if a broken piece of the component is caught, occurrence of abnormal noise and locking are prevented.

As described above, since the resolver 12 is placed inside the cylindrical section 20a of the end housing 20 and separated from the stator core 3 and a rotor yoke 9, it is possible to easily make an adjustment even after the motor 52 is assembled.

The rotor yoke 9 is placed to surround the rotary shaft 7 at a position facing the stator coil 5, and a permanent magnet 11 is attached in a ring form to the outer circumferential surface of the rotor yoke 9. The rotor yoke 9 and the permanent magnet 11 are entirely stored in a protection pipe 10 to construct the rotor.

The motor case 1 is produced by press forming, and the bracket 2 and the end housing 20 are formed by casting. In the motor 52, since the shape of the motor case 1 is simplified as much as possible, it is possible to easily perform drawing, thereby achieving significant cost down. Further, although the bracket 2 and the end housing 20 have complicated configurations, there are not many parts which require a cutting process, and therefore significant cost down can be achieved by casting.

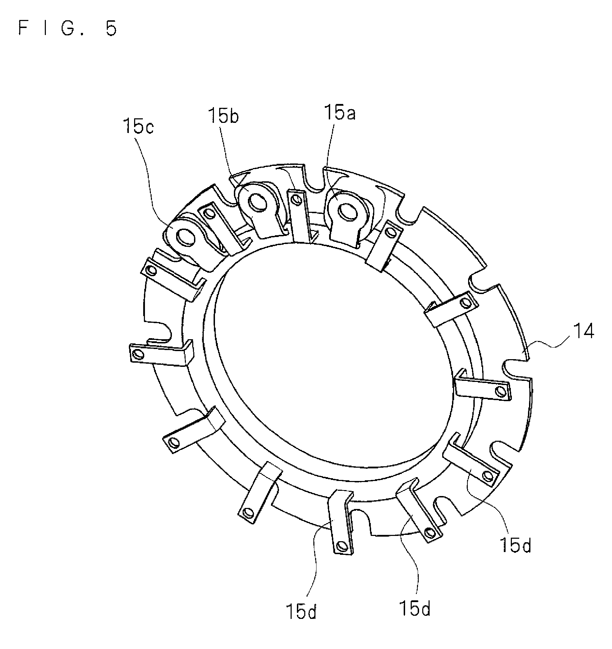

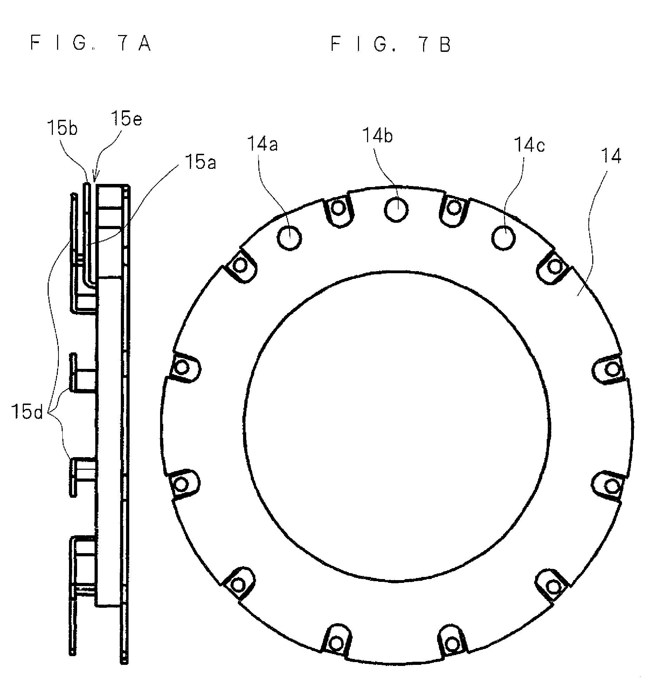

The bus bar housing 14 is made of a resin, and as shown in the perspective view of FIG. 5, the side view of FIG. 7A and the bottom view of FIG. 7B, the bus bar housing 14 is in a substantially ring form having flanges surrounding the ring to separate conductors from each other, and nuts 14d including screw holes 14a, 14b, 14c respectively are provided in portions of the flanges adjacent to the connector 23.

Each of the bus bars 15 stored in the bus bar housing 14 has a partial ring shape with slightly different radius, and includes a terminal 15d for connecting to the stator coil 5 at a necessary position. The terminals 15d are respectively connected to the stator coils 5 according to a need.

The bus bars 15 are placed one upon another and stored in the bus bar housing 14. Since the motor 52 of this embodiment is a three-phase brushless motor, power is supplied to the terminals 15a, 15b and 15c of the three bus bars 15. As shown in FIG. 7A, the terminals 15a, 15b and 15c of the bus bars 15 are placed to overlap with the screw holes 14a, 14b and 14c while maintaining a slight gap 15e (for example, 0.9 mm) from the screw holes 14a, 14b and 14c.

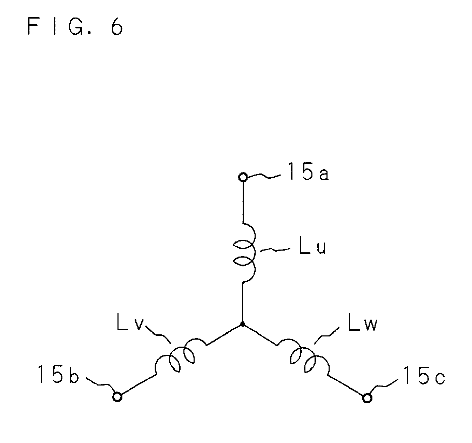

As shown in FIG. 6, the stator coils 5 connected to the respective terminals 15a, 15b and 15c include respective phase coils Lu, Lv, and Lw connected in star (star connection). Here, if the phase coils Lu, Lv, and Lw are connected by way of a delta connection, it is necessary to adjust the respective resistances of three phases to be equal to each other, and it becomes difficult to design bus bars. However, by connecting them in star, designing bus bars becomes easier.

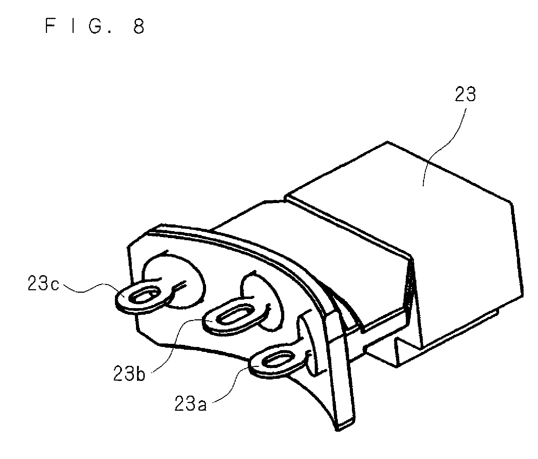

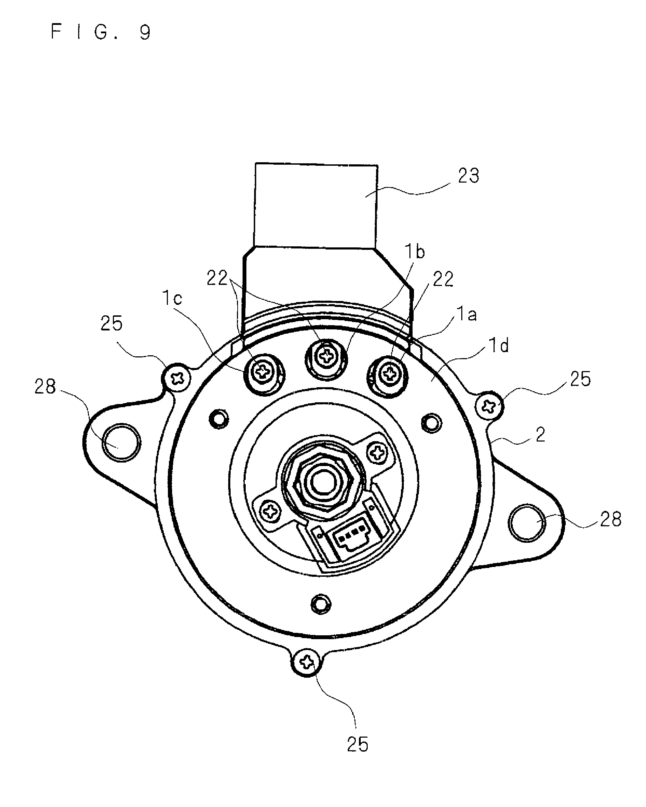

As shown in FIG. 8, the motor-side terminals 23a, 23b and 23c of the connector 23 protrude from a seat formed to curve along the outer circumferential surface of the motor case 1, and are inserted through the respective holes formed in the outer circumferential surface into the motor case 1. As shown in FIG. 9, the motor-side terminals 23a, 23b and 23c inserted into the motor case 1 are respectively screwed to the screw holes 14a, 14b and 14c (FIG. 7B) of the nuts 14d provided in the bus bar housing 14 together with the terminals 15a, 15b and 15c of the bus bars 15 by screws 22 while a driver is inserted through the three holes 1a, 1b and 1c formed in the bottom 1d of the motor case 1 and the three holes formed in the end housing 20.

At this time, the motor-side terminals 23a, 23b and 23c are respectively screwed in a state in which they are inserted into the gaps 15e (FIG. 7A) between the terminals 15a, 15b, 15c of the bus bars 15 and the screw holes 14a, 14b and 14c of the nuts 14d. Thus, the positions of the respective motor-side terminals 23a, 23b and 23c become closer to the bus bar housing 14, and layout of the connector 23 and motor case 1 becomes easier, thereby achieving a compact-size motor 52. Moreover, by increasing the distance between the respective terminals 15a, 15b, 15c and the terminals 15d for connecting to the stator coils 5 of the bus bars 15, it is possible to ensure withstand voltage performance.

The three holes 1a, 1b and 1c formed in the bottom 1d of the motor case 1 are arranged on the same circumference.

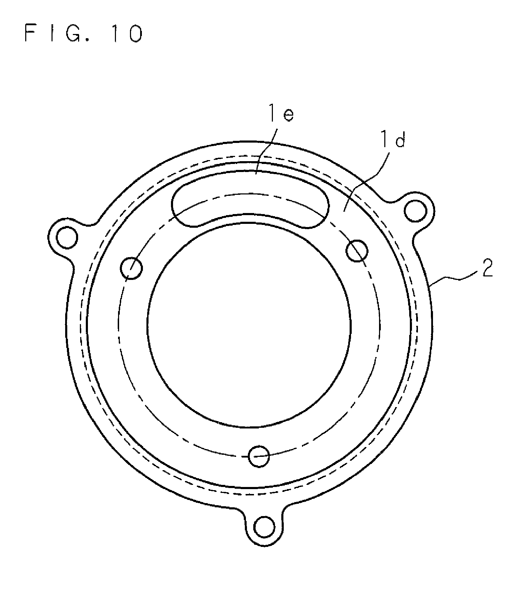

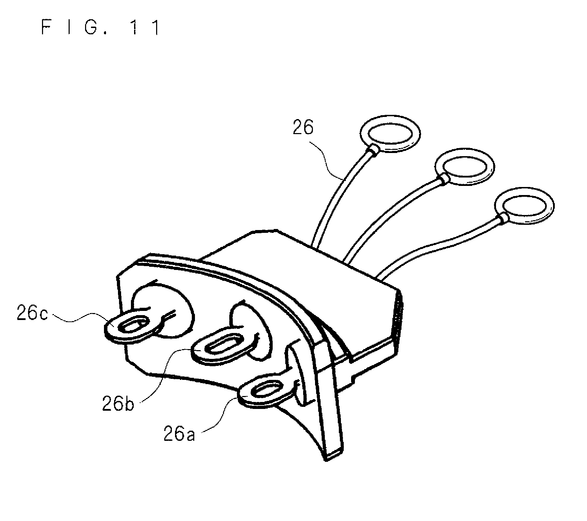

Note that, as shown in FIG. 10, it may be possible to form one oval hole 1e in the bottom 1d of the motor case 1 and one oval hole in the end housing 20, instead of three holes 1a, 1b, 1c formed in the bottom 1d of the motor case 1 and three holes formed in the end housing 20. Moreover, as shown in FIG. 11, it may be possible to use a plurality of lead wires 26 corresponding to the respective terminals 15a, 15b and 15c of the bus bars 15, instead of the connector 23. Motor-side terminals 26a, 26b and 26c of the lead wires 26 protrude in the same manner as the motor-side terminals 23a, 23b, and 23c of the connector 23, and are inserted through the respective through-holes formed in the outer circumferential surface of the motor case 1 into the motor case 1. The motor-side terminals 26a, 26b and 26c inserted into the motor case 1 are respectively screwed to the screw holes 14a, 14b and 14c of the nuts 14d provided in the bus bar housing 14 together with the terminals 15a, 15b and 15c of the bus bars 15 by screws 22 while a driver is inserted through the three holes 1a, 1b and 1c formed in the bottom 1d of the motor case 1 and the three holes formed in the end housing 20.

The end cover 21 has a shape that substantially covers the bottom 1d of the motor case 1, and prevents entry of foreign matter by covering the bottom 1b of the motor case 1, the end housing 20 and the resolver 12. As described above, the end cover 21 is fastened to three screw holes formed in the end housing 20 by the respective screws 24 passing through three holes 24a formed in the circumference and three holes formed in the bottom 1d of the motor case 1 corresponding to the three holes 24a (FIG. 2A), respectively.

As this description may be embodied in several forms without departing from the spirit of essential characteristics thereof, the present embodiment is therefore illustrative and not restrictive, since the scope is defined by the appended claims rather than by the description preceding them, and all changes that fall within metes and bounds of the claims, or equivalence of such metes and bounds thereof are therefore intended to be embraced by the claims.

## Claims

1. An electric power steering apparatus comprising: a torque sensor (53) for detecting steering torque applied to a steering member (67); and a brushless motor (52) for assisting steering, said brushless motor (52) including: a rotary shaft (7); two bearings (8, 18) for supporting said rotary shaft (7) at two positions; a rotor which rotates coaxially with said rotary shaft (7); a stator having a stator core (3) and stator coils (5) wound on the stator core (3); a plurality of bus bars (15) for connecting respectively to said stator coils (5); a cylindrical motor case (1) supporting an outer circumferential surface of the stator core (3) with its inner circumferential surface and having a through-hole (1f) in a middle of a bottom (1d) provided at an end on one side; an end housing (20) for supporting the bearing (18) on one side; a bracket (2) for supporting the bearing (8) on the other side and covering an opening on the other side of said motor case (1); a bus bar housing (14) in a ring shape for storing said plurality of bus bars (15); and a rotational angle sensor (12) for detecting a rotating position of said rotor, wherein said brushless motor (52) is driven with a flow of current according to the steering torque detected by said torque sensor (53), said electric power steering apparatus being **characterized in that**
said end housing (20) includes a cylindrical section (20a) with a flange (20b) surrounding an end on one side, and is inserted into said motor case (1) from the opening until the flange (20b) comes into contact with the bottom (1d), said bus bar housing (14) is placed to surround an outer circumferential surface of the cylindrical section (20a) of said end housing (20), and said rotational angle sensor (12) is placed in said cylindrical section (20a).

2. The electric power steering apparatus according to claim 1, wherein said motor case (1) is produced by press forming, and said bracket (2) and said end housing (20) are produced by casting.

3. The electric power steering apparatus according to claim 1 or 2, wherein said end housing (20) is screwed to said motor case (1).

4. The electric power steering apparatus according to any one of claims 1 to 3, further comprising an end cover (21) for covering the bottom (1d) and through-hole (1f) of said motor case (1), wherein said end cover (21) and said end housing (20) are screwed to said motor case (1) by a common screw (24).

5. The electric power steering apparatus according to any one of claims 1 to 4, wherein said brushless motor (52) is a three-phase brushless motor, said bus bars (15) are arranged to connect the stator coils (5) in star, a connector (23) or lead wires (26) for supplying power is attached in a protruding manner to one side of the outer circumference of said motor case (1), and terminals of said connector (23) or lead wires (26) are inserted through a hole formed in the outer circumferential surface into said motor case (1) and are fastened to the terminals of said bus bars (15) by screws (22).

6. The electric power steering apparatus according to claim 1, wherein said end housing (20) is inserted while applying pressure.
